# EUROPEAN PATENT APPLICATION

(11) **EP 3 009 918 A1**
(43) Date of publication of application: **20.04.2016**
(21) Application number: 14306616.5
(22) Date of filing: 13.10.2014
(51) Int. Cl.: G06F 3/01, G06F 3/0483, G06K 9/00

(54) **Method for controlling the displaying of text for aiding reading on a display device, and apparatus adapted for carrying out the method and computer readable storage medium**

(71) Applicant: Thomson Licensing, 92130 Issy-les-Moulineaux (FR)
(72) Inventor: Schäferjohann, Volker, 30890 Barsinghausen (DE)
(74) Representative: Schäferjohann, Volker

(57) **Abstract**

The invention relates to a method for controlling the displaying of text on a display device (21) and an apparatus adapted for the carrying out the method according to the invention. Today's reading behavior of readers has changed drastically. More and more texts are distributed electronically and will be read on a display device, such as computer monitor, tablet computer, E-book reading device, Smart phones or even on high resolution TV sets. The reading of long texts with small print is a strenuous employment, especially of complex texts for the eyes and the brain.

This invention aims to support the reader in the task of reading text on a display device (21). In each case an area in the text to which the gaze is directed (view areas / focus area of the eyes) is highlighted, respectively. For this purpose the gaze direction is determined (101 to 108) in the reading device (21) and the highlighted region is controlled with gaze direction control (109). The highlighted area moves with this technique with the view. The reader's eye/brain is thus released from the complicated task of line tracking and can better concentrate on word recognition.

## Description

### Technical Field

The invention relates to a method for controlling the displaying of text on a display device and an apparatus adapted for carrying out the method according to the invention. Likewise the invention also concerns a computer readable storage medium for storing software which is used to implement the method according the invention. The invention may also be used for controlling a computer mouse with the help of view direction control.

### Background of the Invention

Today's reading behavior of readers has changed drastically. More and more texts are distributed electronically and read on a display device, such as computer monitor, tablet computer, Ebook reading device, smart phones or even on high resolution TV sets. The reading of long texts with small print is a strenuous employment, especially of complex texts for the eyes and the brain.

### Invention

This invention aims to support the reader in the task of reading text on a display device. Particularly when reading on large display screens, such as 21", 24", 27" and bigger, the disclosed invention can improve the reading experience much.

This object is achieved by a method having the features of claim 1, by an apparatus having the features according to claim 15 and by a computer readable medium according to claim 17. Advantageous embodiments of the invention are defined in the dependent claims.

In support of the concentrated reading the following is proposed:

In each case an area in the text to which the gaze is directed (view areas / focus area of the eyes) is highlighted, respectively. For this purpose the gaze direction will be determined in the reading device and the highlight region will be controlled with gaze direction control. Usually the skilled reader captures in a 1/3 s the focused words. It is usually only one to three words which are detected during an eye fixation. If this area is highlighted, as the eye gets better orientation in the text, the text can be read more quickly or at least with less effort. The highlighted area moves with this technique with the view. The reader's eye/brain is thus released from the complicated task of line tracking and can better concentrate on word recognition.

The text section in which the focus progresses can be highlighted for the reader through frame, underlining, character color, background color, different font, bigger line spacing, colour gradient, text effect like 3D effect or the like in any combination.

As a further improvement it can be used in the highlighted section of text a different typography (font, font size, font style like bold or italic, etc.). As appropriate font for better legibility a sans serif font such as Microsoft Sans Serif or Gill Sans comes into question. In the focus area an increase of the font size, is used at the eye fixation position for highlighting to improve the legibility.

The process of highlighting text during reading may be in the form of starting highlighting text when the user's gaze is directed to the beginning of a sentence. Then as the user's gaze progresses, more and more sections of the sentence will be highlighted successively. This proceeds further until the whole sentence is highlighted. This has the advantage that user's gaze may quickly jump back to the beginning of the sentence without need to search for it if the user feels that he has not understood the sentence and needs to read it once more.

If the user has finished reading that sentence and the user's gaze steps further to the next sentence, the highlighting of the previous sentence will be cancelled and the beginning of the next sentence will be highlighted.

In a further embodiment of the invention the highlighting region precedes the actual user's gaze by one or more screen segment. This helps to support the reader because the gaze can follow the highlighting region as it advances which provides even better orientation in the text.

For gaze direction determination a known eye tracking technique may be used. Such a technique is e.g. described in US 6,553,281 B1. Since these eye tracking technique deliver accurate results but work with IR light radiation transmitted to the user's eyes and use IR cameras for detection the reflected IR light, they are pretty expensive to implement in consumer electronic devices like personal computers, notebook computers, tablet computers, smart phones, Ebook readers or TV sets. A disadvantage might also be that the customers don't like to be exposed to the additional IR radiation that is directed to the eyes.

In one embodiment of the invention it is therefore proposed to capture the user's face with a normal camera e.g. a webcam with which the above mentioned devices are anyhow equipped and determine the gaze direction with the help of image processing techniques.

In a further embodiment it is proposed to divide the display screen area into a plurality of segments, and with head position processing it is determined to which segment the user's gaze, is directed to. Here, it is advantageous that during a training phase with the user in which the user is asked to look at certain segments of the display screen and where in each case a corresponding image is captured of which in each case the corresponding head position is extracted and archived, and wherein the best matching archived head position determines during working phase to which segment the user's gaze is directed to.

For head position detection two techniques are presented in detail, one is based on contour extraction in the captured image and a step of comparing the extracted contour with archived contours which have been extracted and archived during said training phase, and wherein the best matching archived contour image determines to which segment the user's gaze is directed to. By extracting and comparing contours, the amount of data in the captured images is drastically reduced, so that the amount of data that is to be processed is also reduced so that fewer resources are required for this task.

The second technique is based on "T"-symbol extraction which reduces the amount of data to be handled further down. The so-called "T" symbol is built by the line on which the eyes lie in combination with a line along the back of the nose. The extraction of the "T" symbol also helps to eliminate disturbing effects of other sections of the viewer's face, e.g. if he is speaking or making other movements with the mouth like chewing a chewing gum or others.

To further improve the accuracy of gaze direction determination it is proposed in addition to said head position processing to perform an eye position processing and a step of comparing the extracted eye position with archived eye positions. An adequate training phase for the eye position determination is also proposed. Preferably correction coordinates are determined as a result of comparing the extracted eye position with the archived eye positions and correction coordinates determine by which the view direction determination based on head position detection is to be corrected to result in a higher accuracy gaze direction determination. The technique is thus a combination of a coarse determination of the gaze direction with head position detection and a correction of such result with the eye position detection for a refinement of the gaze direction determination.

In the technique of eye position detection an interpolation technique is also proposed. This is carried out between the best matching archived eye position and the straight looking eye position from the additional training phase, for determining the correction coordinates for the current extracted eye position. Using this technique reduces the burden for the user in the additional training phase.

To improve the reading, particularly when reading on small screens like in Ebook readers or smart phones, it may be enough if only the vertical viewing direction is accurately detected. Starting from the identified vertical viewing direction is the corresponding line of text to which the gaze is directed, highlighted for the reader. In another embodiment, as a text section that is highlighted simply the sentence in which the focused area of the eye is positioned will be highlighted. Further alternatively, a predetermined number of lines of text or a whole paragraph is highlighted according to the determined gaze direction.

Even if the view direction detection in times do not exactly match the image area to be directed to the actual user's view, the experienced user can quickly select the desired range by head movement if fine adjustment by conventional mouse seems too cumbersome. Through the training and the constant use, the user will always be trained to work with the view direction controlled reading mode. Fine adjustment can be made at the beginning alternatively using the cursor control keys. Especially when reading texts can be selected the correct line by pressing the Up or Down button quickly.

Further advantages and details of the invention are described below with reference to the appended drawings. It is understood that the invention is not limited to the exemplary embodiments and that specified features can also expediently be combined and/or modified without departing from the scope of the present invention as defined in the appended claims.

### Brief Description of the Drawings:

In the drawings:
Fig. 1 shows the principle arrangement when a user is sitting in front of a computer monitor equipped with a webcam;
Fig. 2 illustrates an example of the arrangement of a plurality of webcams at the housing of the computer monitor;
Fig. 3 illustrates an example of the arrangement of a stereo webcam at the housing of the computer monitor;
Fig. 4 illustrates an example of a segmentation of the computer monitor's screen into fields for detecting the user's gaze direction based on webcam image processing;
Fig. 5 illustrates an example of a finer segmentation of the computer monitor's screen into fields for detecting the user's gaze direction based on webcam image processing;
Fig. 6 shows a block diagram of a computer to which the computer monitor is connected;
Fig. 7 shows webcam captured pictures in case of the webcam arrangement depicted in Fig. 1 captured during a training phase with screen segmentation according to Fig. 3;
Fig. 8 shows the pictures of Fig. 7 after contour extraction processing;
Fig. 9 shows a flow chart for a software program to be executed by the computer shown in Fig. 6 during a training phase for view direction detection;
Fig. 10 shows a flow chart for a software program to be executed by the computer shown in Fig. 6 during a working phase for view direction detection;
Fig. 11 shows the pictures of Fig. 7 after "T"-symbol extraction processing;
Fig. 12 illustrates the extreme eye positions captured during an additional training phase for view direction detection processing according to the invention;
Fig. 13 shows a flow chart for a software program to be executed by the computer shown in Fig. 6 during a training phase for calibrating the eye position detection;
Fig. 14 shows a flow chart for a software program to be executed by the computer shown in Fig. 6 during a working phase in which head position extraction and eye position extraction are combined for view direction detection;
Fig. 15 shows the principle application of view direction detection for the purpose of aiding text reading; and
Figs. 16 - 21 illustrate an improved example of aiding text reading based on view direction tracking.

### Detailed Description of the Invention

To solve the problem described above, a line of sight controlled text highlighting is proposed. If the user is reading text on screen, then his view will be directed to the text passage he is actually reading. This view direction will be detected according to the invention by the computer and the corresponding focused text passage will be highlighted.

For view direction tracking as an embodiment, the image analysis of the captured picture of the built-in computer monitor webcam is proposed.

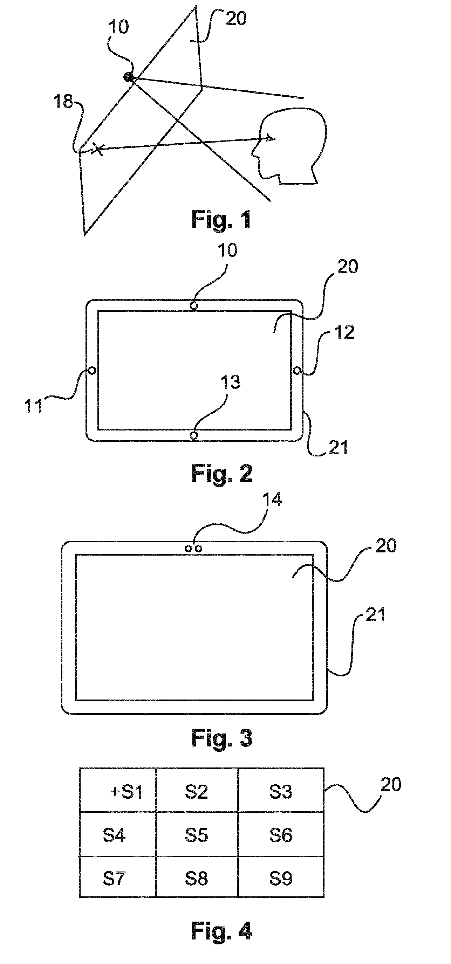

Fig. 1 shows the principal arrangement when a user is reading text on a display device in front of him, e.g. a computer monitor. The view is directed on a focus point 18 on screen 20. The webcam 10 is observing the user when reading and captures a picture. By image analysis of the captured picture the connected computer determines the eye focus point on screen and highlights the corresponding text passage (this may be a single word or a plurality of words) to support the user in his reading. Because the read text passage is highlighted, the reader can easily find out the place where to continue reading in cases where his gaze temporarily loses the focus point. The reader is released from the operation of line tracking and can better concentrate on word recognition.

Fig. 2 shows an arrangement with a plurality of cameras 10, 11, 12, 13 which are positioned in the center of each side of the displays 21 housing. All cameras observe the reader and capture pictures during text reading. There are therefore four perspectives in which the reader is observed. This helps to increase the accuracy of view direction detection. The position of the striking points can be calculated more accurately. The calculation method is known in principle and is, for example, already used in the new "Torlinientechnik" at the 2014 FIFA World Cup.

Fig. 3 then shows another arrangement where a stereo camera 14 is positioned in the center of the upper border of the display device 21. The stereo camera is able to take a 3D image. Then it can be calculated based on a depth map in particular, the tilt of the head in horizontal and vertical direction in an accurate fashion. If the eye position is straight, the eye focus point can be estimated with high accuracy.

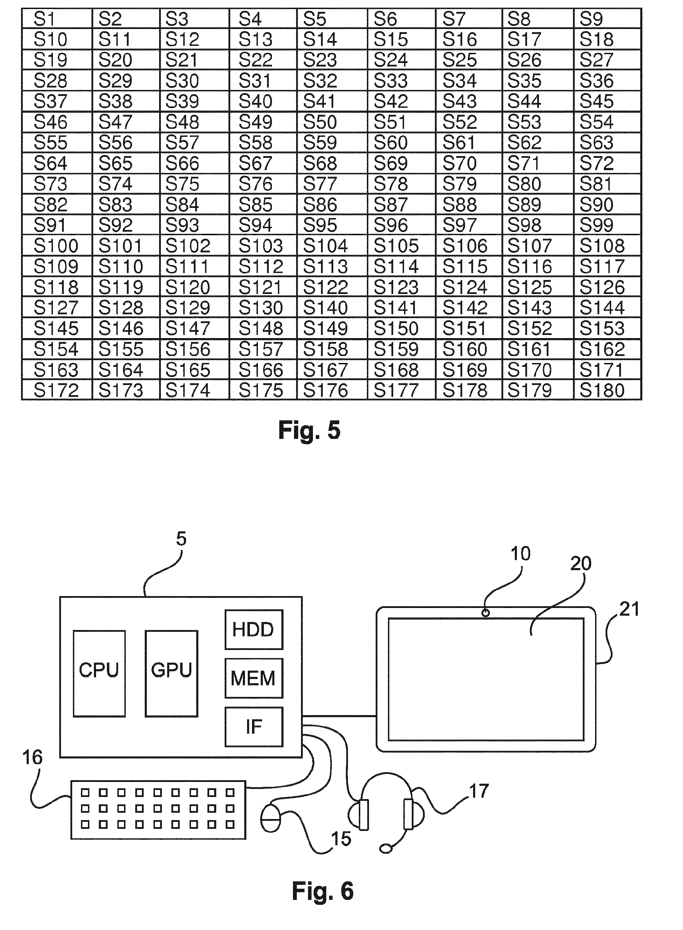

Fig. 4 shows a first embodiment of a segmentation of the display screen 20. The screen is divided into rectangular segments S1 to S9. The screen is in the format of a 16:9 aspect ratio. A cross is depicted in the center of segment S1. This segmentation will be shown on screen during a training phase for view direction detection. The segmentation in 9 equally sized segments shall illustrate the principle solution according to the invention. This segmentation however can be regarded as being insufficient for the purpose of aiding the user in text reading, particularly if the user is not reading over the full screen along the long side of the screen. The principle however is correct and can also be applied when a finer segmentation of screen is used. An example of a finer segmentation of the display screen is shown in Fig. 5 with a total of 180 segments S1 to S180 for a 16:9 screen. This segmentation is right for a 15,4" or 17" computer monitor screen but certainly and depending on the display size such segmentation could further be increased such that even more segments might be used. The use of a fixed sized raster with segments is advantageous if a document is read on the display screen that does not have text encoding, e.g. a PDF document. For text documents with text encoding such as DOC, TXT, ODF, etc. documents it is advantageous to adjust the segment size to the size of the displayed text, so that it is possible to highlight the text in text lines and to avoid a highlighting of texts which is not line-accurate. Of course it is possible to first perform a step of optical character recognition (OCR) in non-text documents such as PDF documents to be able to support the reading of text in the same way as in text documents.

Fig. 6 shows a block diagram of the computer 5. The computer monitor 21 is connected with the computer 5. Connected with the computer are keyboard 16 and mouse 15. The image processing for view direction determination is preferably performed in the graphical processing unit GPU. By this measure the CPU is released from this relatively complex task. As an alternative it could also be performed in the CPU or in parallel in the CPU and GPU is a cooperative manner. The archived images will be archived in hard disc drive HDD. Instead of a hard disc drive a solid state drive SSD can also be used. IF is the interface section and MEM is the computer's memory. Reference number 17 denotes a head set or microphone for allowing voice control and a specialized training method which will be explained later on.

Of course, the computer depicted in Fig.5 is an example and it is expressively mentioned that the invention may be used in similar devices such as personal computers, notebook computers, tablet computers, smart phones, Ebook readers or TV sets. Such devices are equipped with display screens in the form of LCD display panels, LED display panels, OLED display panel, E-ink display panels, Plasma display panels and the like.

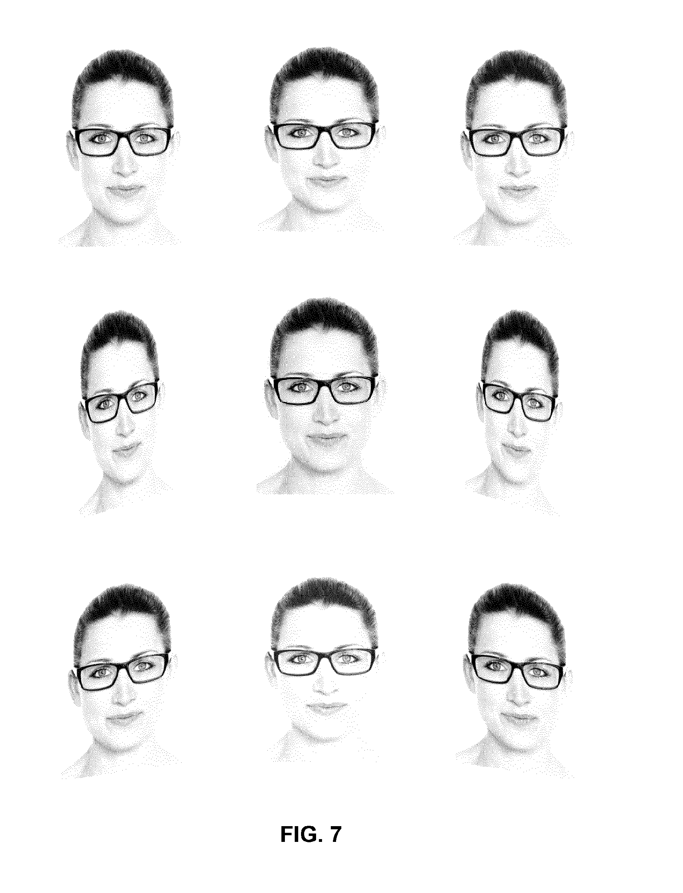

In the following it will explained different embodiments for gaze direction detection. Fig. 7 illustrates the captured pictures captured during training phase when the user is staring at the depicted cross in the center of each segment S1 to S9 depicted in Fig. 4. It is seen that the camera 10 is seeing the user's face with different tilts corresponding to the required head movement when looking straight at the cross in each segment. Ideally the user does not move the eyes when looking at the cross but is turning the head in the right direction for looking at the cross straight. Since the gaze direction determination is based on image comparison, it is proposed to use image processing before archiving a picture during training phase. Any image processing which reduces the amount of data in the picture by delivering good results during comparison is suitable. As a first example of data reduction image processing it is mentioned a contour processing.

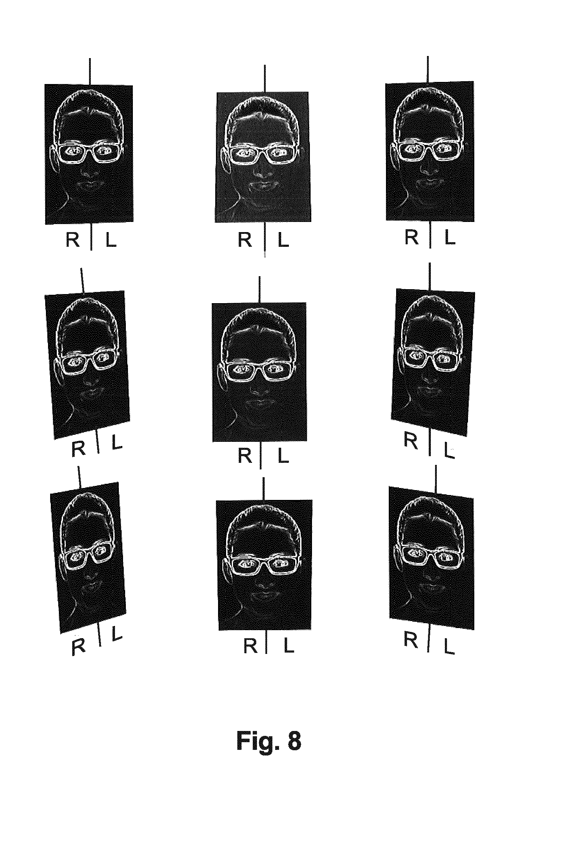

A computation of the contours of the users face in the captured images is performed. Fig. 8 shows the extracted contours of the user's face for the images of Fig. 7. One such technique for contour extraction is, for example, described in patent U.S. 7,176,939 B2. In this technique, by means of a gradient filter, the regions of the image in which high gradients occur are determined. The contours are very prominent. However, other image processing method for highlighting the contours may also be considered for this. Thus, the program MS Word offers an image processing function with which the contours can be highlighted. Many image editing programs employ techniques to highlight contours. Other techniques are referred to as edge detection or edge processing technology and would be effective for the solution of the same problem in consideration. If only the contours for the image are used for comparison, further disturbing influences for the comparison are eliminated. As indicated in Fig. 8, the contour images can be divided into two parts, right and left half. This helps for eliminating ambiguous comparison results as will be explained below.

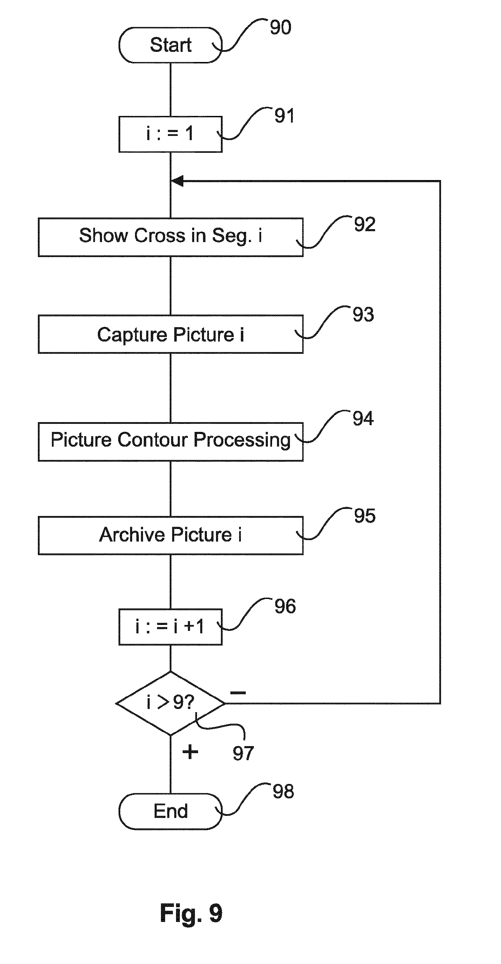

First, it will be explained the training phase in more detail. Here, the user is prompted in the training phase to direct attention to a particular position 18 displayed on screen. This is illustrated in Fig. 4. It is the displayed cross in the center of segment S1 at which the user shall look straight. The camera 10 takes a picture and saves it. This is done for the different areas S1 to S9 in case of Fig. 4 or S1 to S180 in Fig. 5. An example of captured images during training is shown in Fig. 7. The same pictures are shown in Fig. 8 after extraction of the contours. When all areas have been covered several times, if necessary, the training is ended. The operation of the computer in training phase with a corresponding computer program is illustrated in Fig. 9. The start of the program is labeled with reference number 90. In step 91 an index i is set to the value 1. In step 92 a cross is displayed on screen 20 in the center of the segment with index i. The user looks at the cross and the camera takes a picture. in step 93. It follows the picture contour processing for the captured image in step 94. The resulting image with extracted contours contains less data and is archived in step 95. In step 96 index i is incremented. In step 97 it is checked if the index i now exceeds the value 9. If not, the program branches back to step 92 and the next segment will be treated. If yes, the training phase is ended in step 98.

During operation, a captured current image is compared with the archived images of the training phase. The training image with the closest match then specifies what segment of the screen the gaze is directed to.

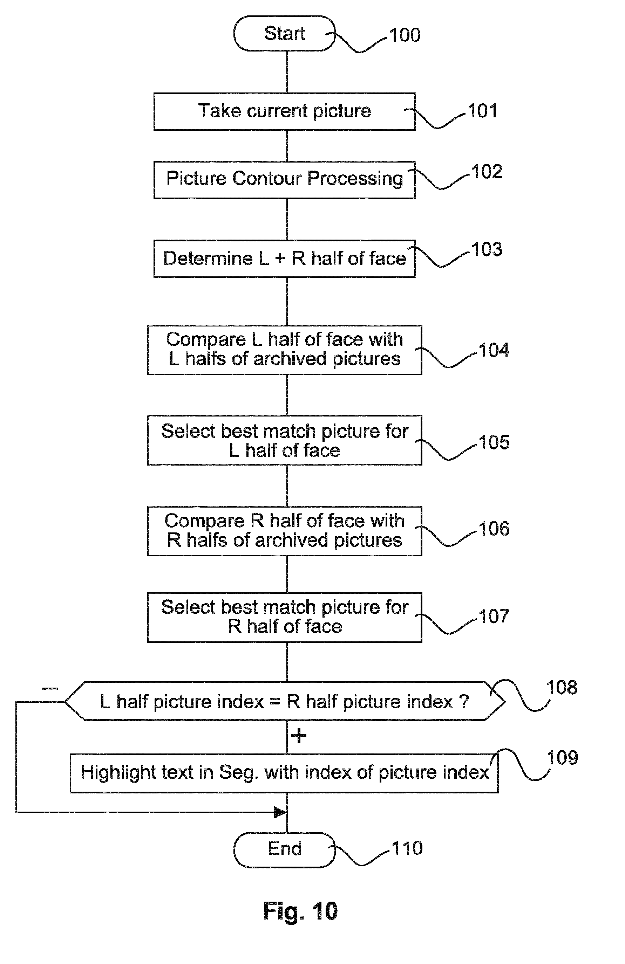

The operation of the computer 5 in working phase with a corresponding computer program is illustrated in Fig. 10. The program starts at step 100. In step 101 the camera 10 takes a picture. It follows the contour processing in step 102. The resulting image with extracted contours is divided in left and right half like depicted in Fig. 8. In step 104 the computer 5 compares the left half of the contour image with the left halves of the archived contour images from training phase. The best matching image from training phase is selected. The simplest comparison operation looks at the sum of the video values in the two images to be compared. Another form is to build the difference in video values for each two corresponding pixels and summing up the square of the differences. The image with the smallest total square difference is the best matching image and is selected. Any other suitable form of performing the comparison operation might be used alternatively. The process continues in steps 106 and 107 where the same steps are performed for the right half of the captured image. Then in step 108 it will be checked if the picture index determined as the best match for the left picture is equal to the picture index determined as the best match for the right picture. The splitting of the contour images in left and right halves has the advantage that not the wrong side of the screen is mistakenly selected when the pixel differences of a whole picture would sum up to a similar value regardless of whether the reader is looking at the left side of the screen or the right side of the screen. When the two determined picture indexes match up in query 108, the text in the corresponding segment of the screen is highlighted in step 109. Preferably the segments are made small enough that only 1 to 5 words in a text line are highlighted. Of course, an embodiment that highlights more text during reading in a segment is also considered according to the invention. The decisive point is that the highlighted region follows the user's gaze direction during reading. The process ends in step 110. If the two picture indices don't match up in query 108, the text highlighting step 109 is omitted and the process ends in step 110 directly.

In the embodiment of Figs. 8, 9 and 10 the picture contour extraction corresponds to the image processing which is used for gaze direction determination. Alternatively an evaluation of eye position, nose position, positions of prominent points of spectacles and or other distinctive points of the head or face of the operator may be done. For this purpose, and also for the first embodiment it is more advantageous to use instead of the webcams today often used with wide angle lens a webcam with telephoto lens or zoom lens. Such lenses capture the operators face in bigger size and more planar, such that the head movements are easier to detect.

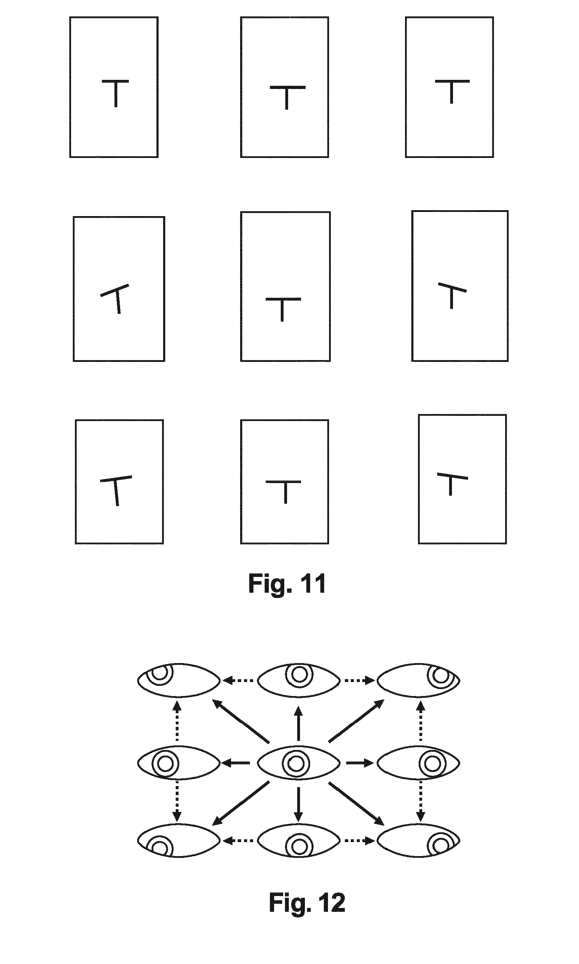

What delivers a good estimation of the gaze direction, is the extraction of a so-called "T"-symbol built by the line on which the eyes lie in combination with an axis of the nose. The images of Fig. 7 after "T"-symbol extraction are illustrated in Fig. 11. When the user turns his head when reading line-wise, the "T"-symbol is tilted, rotated and shifted at the same time. The exact position of the "T"-symbol can be translated into a view point on the screen if the viewer is not moving the eyes in addition to the head movement. The extraction of the "T" symbol helps to eliminate disturbing effects of other sections of the viewer's face, e.g. if he is speaking or making other movements with the mouth like chewing a chewing gum or others. Even if the user is supporting his head with his arm, it does not really disturb "T" symbol extraction. For extracting the "T"-symbol, known algorithms from photography may be used like red eye correction algorithm which determines the exact positon of the pupils, the center of which define the end points of the upper line of the "T"-symbol. An algorithm for defining the lower line of the "T"-symbol is easy to implement. That algorithm determines the lowest point of the nose with the help of gradient determination or edge detection and creates a line from the midpoint of the upper "T"-symbol line to the lower end of the nose. Any other suitable algorithm for "T"-symbol extraction might be used instead.

To reduce the burden for the user during training phase, an interpolation technique may be used. That means that the training would not be performed in all screen segments S1 to S180 but only in a reduced number of segments distributed over the screen. For the intermediate screen segments positioned between two trained segments, the head positions would be calculated with interpolation and correspondingly archived. Particularly in the embodiment with "T"-symbol extraction this interpolation technique works well, since the "T"-symbol position is a linear function of the head turning in upper/lower direction starting from the screen center and head turning in the left/right direction starting from the screen center.

A problem with the above explained embodiments in which the view direction is determined based on head position detection is that, when reading text, the user does not look at each text passage straight. Usually the user can also use eye movement for focusing text. In that case the gaze direction determination based on head position tracking might not be accurate enough. To tackle this problem, an improved embodiment will be explained in the following. That solution requires an additional training method and a different working process. In general that solution starts out with the head position detection as explained above. The corresponding algorithm delivers an estimation of the view point on screen. Then by eye position detection and a corresponding translation into a corrected position of the estimated view point, the final view point is determined.

Fig. 12 shows different eye positions and how they appear in the image captured by the camera 10. Since the camera 10 captures the whole face of the reader, for determination of the eye position, there is a need of zooming in the image and extraction of the eye region in the face. The extreme eye positions when the user is looking at the upper left and right corner, lower left and right corner, center upper border, center lower border, center left border and center right border without head movement are depicted in Fig. 12. For determining the exact eye position, the centers of the pupils of the eyes are determined relative to the borders of the eyes, e.g. to the borders of the eye lids which normally can easily be extracted with image processing, e.g. edge detection. Then the center positions which correspond to the eye position can be compared with a current eye position during text reading. To use the center position of the pupils has the advantage that the center position is accurately to be determined even in different lighting situations where the size of the pupils may vary.

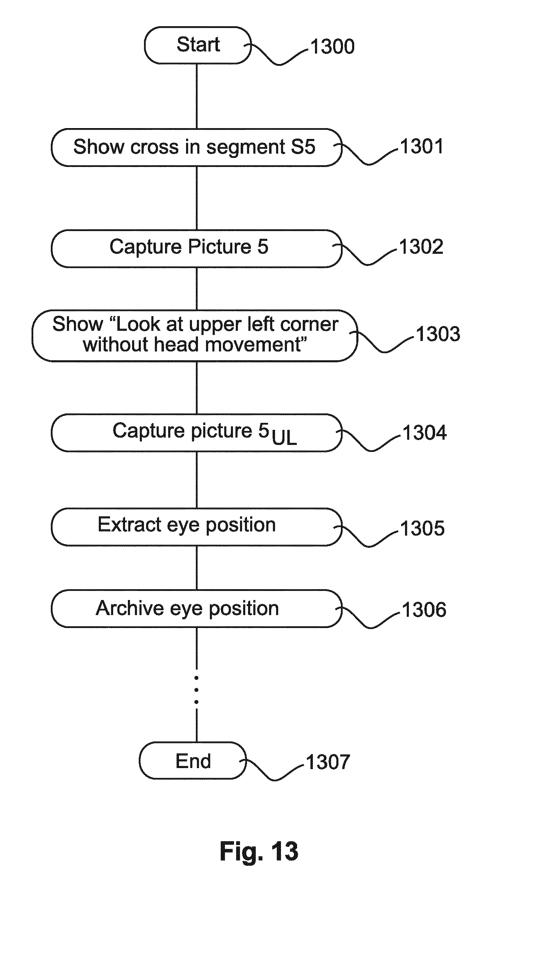

The operation of the computer 5 in the additional training phase with a corresponding computer program is illustrated in Fig. 13. The start of the additional training phase is in step 1300. In step 1301 a cross is shown on screen in the center of segment 5 in Fig. 4. An image is captured in step 1302. In step 1303 it is displayed a message "Look at upper left corner without head movement!". A cross might be shown in the upper left corner, too. The user looks at the upper left corner and an image is captured in step 1304. What follows in step 1305 is the eye position extraction with image processing as above mentioned. The extracted eye position will be archived in step 1306. In the following steps (not shown) the user is prompted to look at upper right corner, lower left corner, lower right corner, center of upper border, center of lower border, center of left border and center of right border. In each case an image is captured, the eye position will be extracted and archived like for the upper left corner. The additional training phase is then ended in step 137.

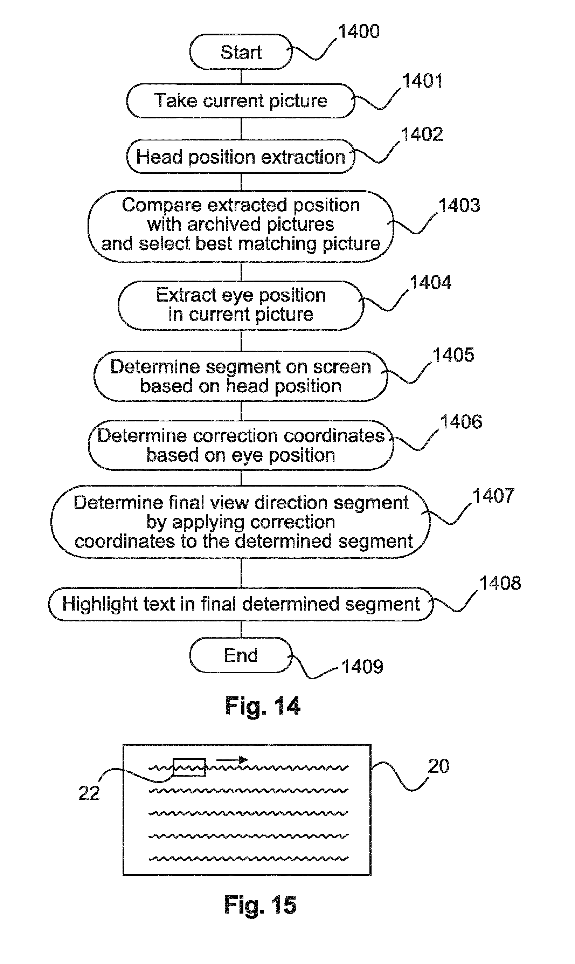

Next the operation of the computer 5 in the modified working phase is explained with the help of Fig. 14. The start of the working phase is with step 1400. The user looks at the screen during reading and an image is captured with camera 10 in 1401. With image processing (e.g. contour extraction or "T"-symbol extraction) the head position is determined in step 1402. By comparing the head position with the archived images the best matching image is determined in step 1403. This is translated into the segment of the screen to which the best matching archived image belongs in step 1404. Afterwards the eye position is extracted from the current image in 1405. Since the extracted eye position most of the time lies in between the extreme positions archived in the additional training phase and the center position, the correction coordinates are determined with the help of interpolation. Such interpolation techniques are available, for example in the IEEE article "Calibration-free Gaze Tracking Using Particle Filter" by PhiBang Ngyuen, Julien Fleureau, Christel Chamaret and Philippe Guillotel, Multimedia and Expo (ICME), 2013 IEEE International Conference on, 15-19 July 2013, San Jose, CA, USA. These correction coordinates provide the information how many segments to the left or right and how many segments up or down starting from the determined view point in step 1402 the focus point of the user's gaze lies on screen. The correction coordinates are calculated in step 1406. In step 1407 the correction coordinates are applied to the determined segment on screen based on head position detection and the final view point is determined this way. The highlighting of text then occurs in the final determined screen segment in step 1408. The process ends in step 1409. Of course, since text reading is a continuous task, instead of ending the process in 1409 the whole process may start anew from the beginning with step 1400 until a predetermined ending criterion is fulfilled.

Of course, a trade-off is being made between how fine the segmentation of the screen can be made and the expenditure for comparing images. For the case a segmentation of the screen cannot be made finer for head position detection, it is proposed to also determine the view point based on head position detection in step 1404 with the help of an interpolation technique like in the step 1406.

The way the text is highlighted during reading is principally illustrated in Fig 15. The user's gaze is tracked and the highlighted region 22 moves over the screen line-wise from left to right and top to down. This way it is very convenient for the user's eye to read the text since the task of line-tracking is done by the computer. Since the focus area is highlighted, even word recognition is eased for the user.

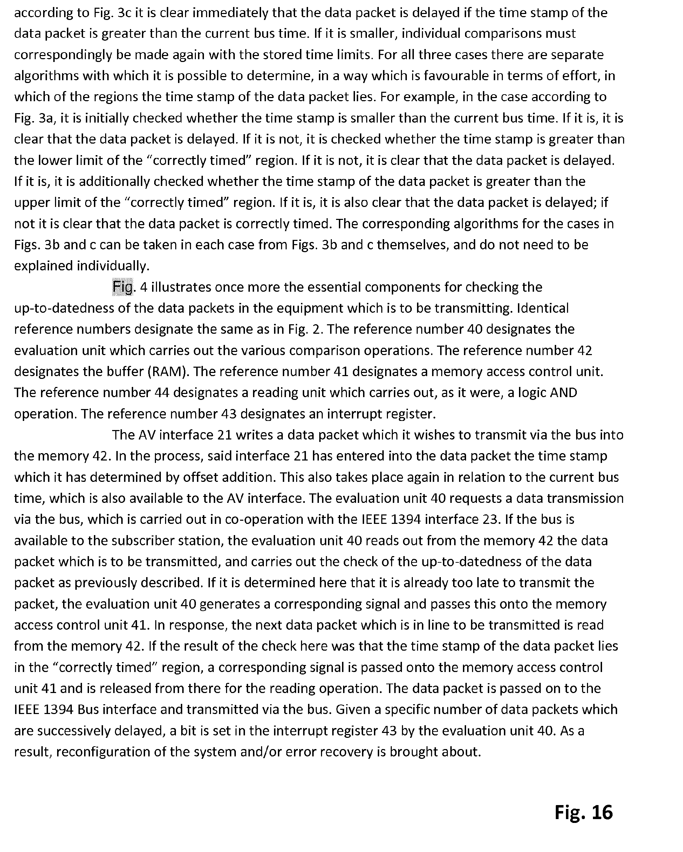

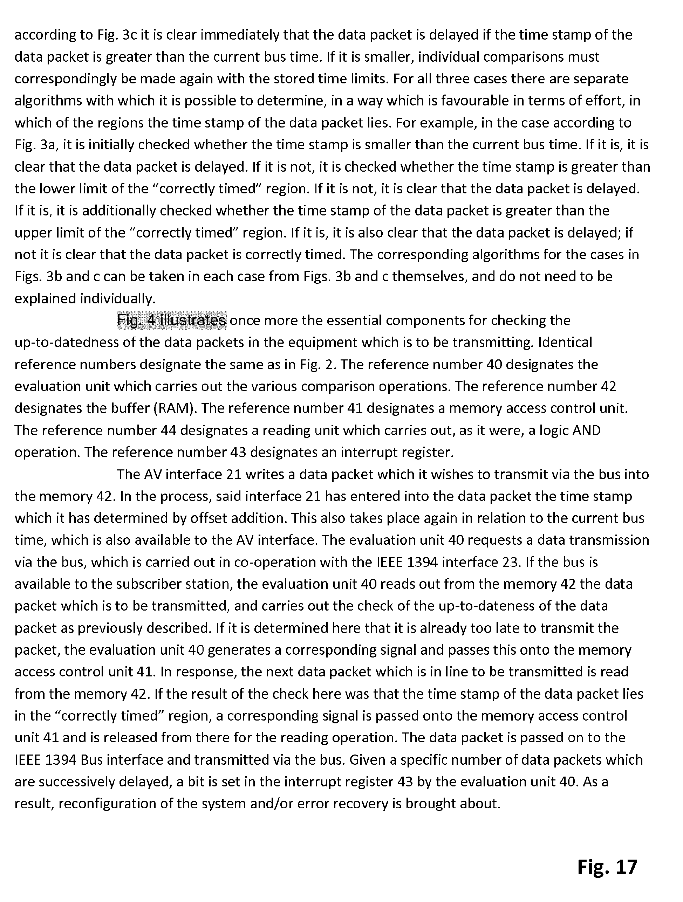

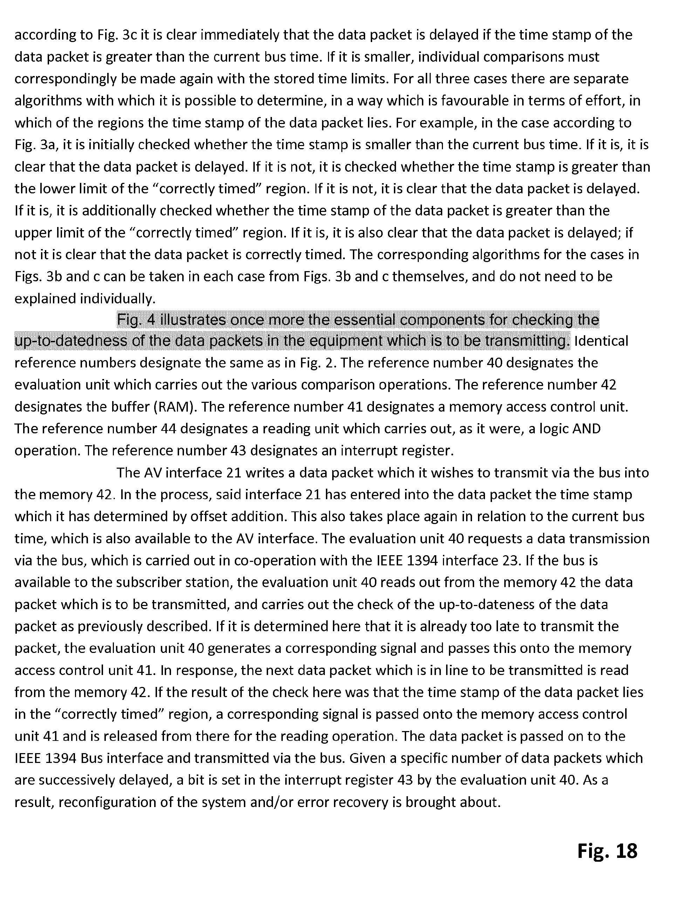

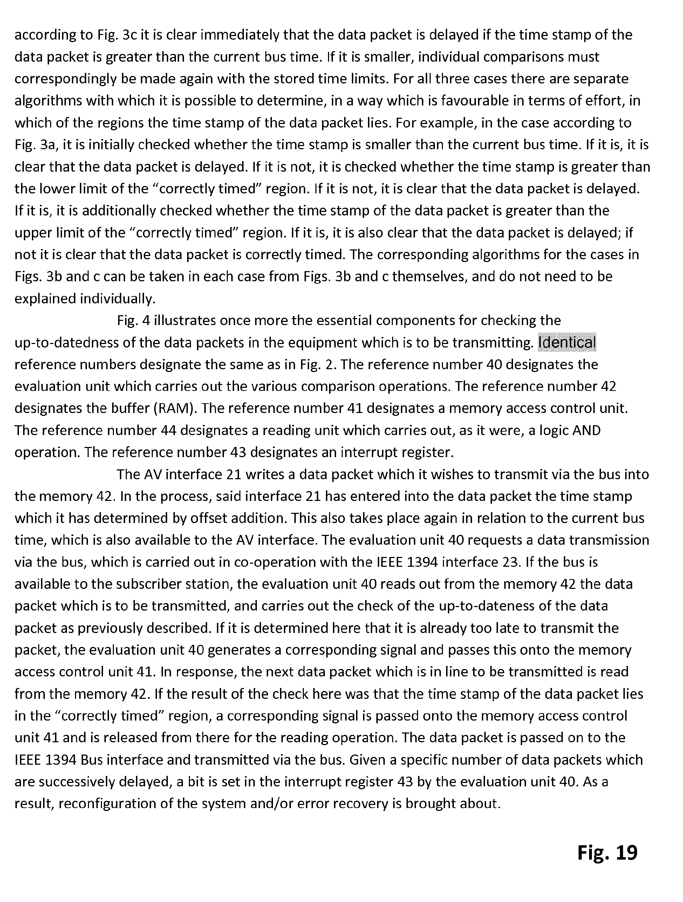

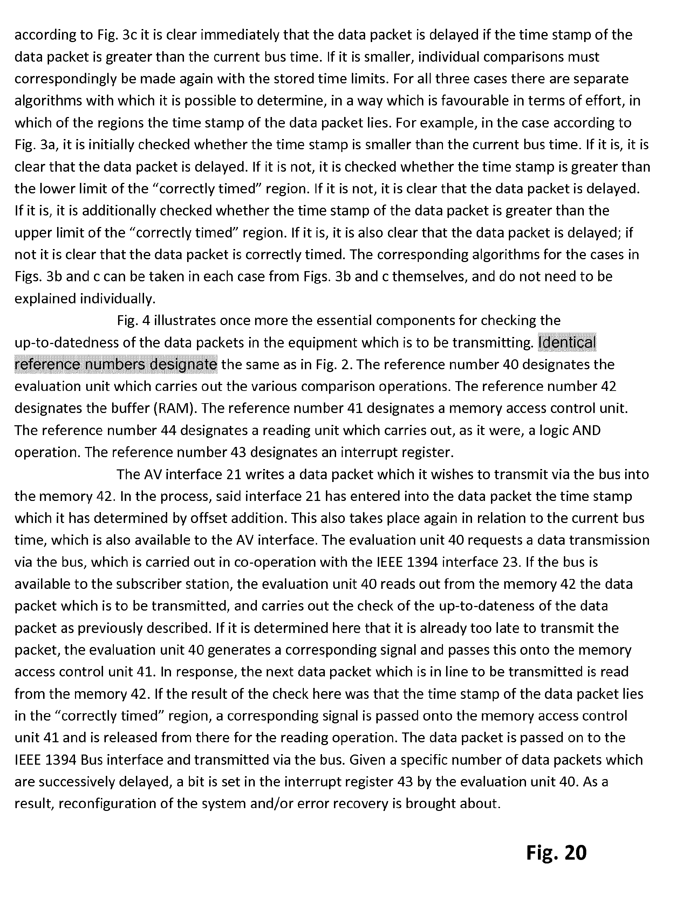

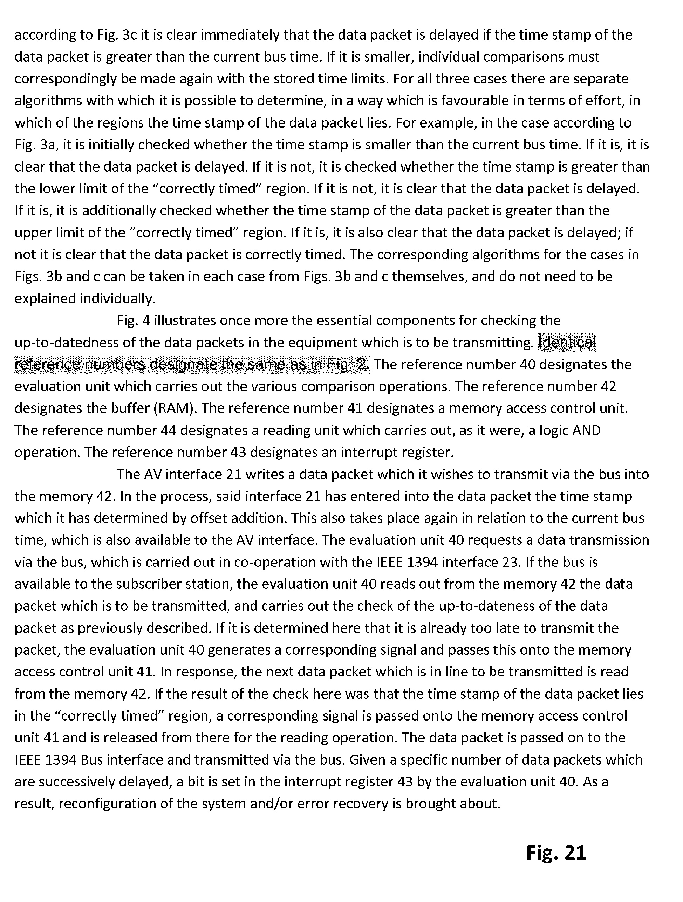

Fig. 16 shows the start of reading the second paragraph of a page. Just the first expression "Fig" is highlighted. In Fig. 17 the next text section is highlighted as the reader is carrying on reading. It should be noted, that in this embodiment the first expression remains highlighted as well. In Fig. 18 it is shown that the whole first sentence is highlighted when the user fixates the end of the first sentence. This way the user may quickly jump back to the beginning of the sentence in case he thinks that he did not understand the sentence fully, which happens quite often in reading complicated texts. If the user's gaze jumps back to the beginning of the sentence, the highlighting of the sentence starts out anew from the beginning. If the user understands the sentence perfectly and proceeds further in reading, the beginning of the next sentence will be highlighted and the highlighting of the first sentence will be cancelled, see Fig. 19. Fig. 20 shows an intermediate state, when the user has read the first four words of the second sentence. Finally, Fig. 21 shows the highlighting of the complete second sentence. In all Figs. 16 to 21 for improving legibility the font in the highlighted text section has been modified from originally Calibri (Body) 11 pts to Microsoft Sans Serif 11 pts.

In a further embodiment the highlighted text region can precede the actual gaze direction in one or more segments of the screen. This can be useful since it provides a better orientation to the user's eye, so that the gaze may follow the preceding highlighting region.

The text section in which the focus progresses can be highlighted for the reader through frame, underlining, character color, background color, different font, bigger line spacing, colour gradient, text effect like 3D effect or the like in any combination.

As a further improvement, it can be used in the highlighted section of text a different typography (font, font size, font style like bold or italic, etc.). As appropriate font for better legibility a sans serif font such as Microsoft Sans Serif or Sans Gill comes into question. In the focus area an increase of the font size, is used at the eye fixation position for highlighting to improve the legibility.

Now, when the user is starting reading with an unusual position of his head, and the best matching archived image does not correctly reflect the starting position of reading, the user is allowed to override the proposed starting position by reading aloud the paragraph number on screen from where he wants to start. So by saying the words "second paragraph", the computer starts highlighting text from the beginning of the second text paragraph on screen. As an alternative he may read the page and line where he wants to start or the column and line where he wants to start reading. Further alternatively the user may select the starting position with the help of the computer mouse or touchpad.

The invention may also be used for controlling with view direction control the mouse pointer. If the viewing direction is not detected accurately enough for pointing at a menu option on screen, then the pointer is set to the appropriate segment S1 to S180 of the screen image. The exact positioning of the mouse cursor is then made with the conventional mouse or touch pad. By pre-selecting the image area using gaze control to the executive mouse movements are reduced. When the focus of the eyes can be calculated accurately enough, to dispense with the mouse or the touchpad is possible. Then only the mouse buttons remain, but these can then be provided on the keyboard.

If the user wants to interrupt the gaze control of the mouse, pressing a pause button is sufficient. Such pause buttons are provided on the keyboards today usually for controlling the DVD drive of the computer and can be used with the same for the new purpose. The cursor then remains at the same position on the screen during intermission. The user can let his gaze wander freely, without the mouse pointer changing its position. Such a pause button may also be used for text reading with gaze determination.

In a further embodiment in which the viewing direction is to be detected more accurately, the user is prompted during training to read a displayed text aloud. During reading the view is migrating further from eye fixation to eye fixation. It is recorded here a sequence of images. This can be done in form of a conventional video recording. The number of images which is taken, then corresponds to the usual speed of 25 frames / s. Same time, since the tone is also recorded via the microphone 17, the computer through sound analysis can determine the exact time at which the reader has targeted specific text passages and then archive the associated matching picture or the corresponding image processed picture. During operation, these archived images are accessible and are compared with the image for the current viewing direction.

## Claims

1. Method for controlling the displaying of text for aiding reading on a display device (21), comprising the steps of displaying the text on a display screen (20), determining the view direction of a user while reading text on the display screen (20), highlighting text in a segment (S1 to S180) of the display screen which corresponds to the determined view direction, and tracking the user's view direction by successively determining the view direction of the user while reading text on the display screen (20) and successively highlighting text in the corresponding segments of the display screen (20).

2. Method according to claim 1, wherein the highlighting of text during view direction tracking is started at the beginning of a sentence when the user's view is directed to the corresponding segment (S1 to S180) of the display screen (20) and wherein successively more and more sections of said sentence are highlighted such that when the user's view is directed to the end of said sentence the whole sentence is highlighted on the display screen (20).

3. Method according to claim 2, wherein, when the user's view is directed to the beginning of a following sentence in the text on screen, the highlighting of the previous sentence is cancelled and the highlighting of the following sentence is started by highlighting the first section of the following sentence.

4. Method according to one of the previous claims, wherein the front of the highlighted text area precedes the determined view direction and a successive gaze direction by one or more segments (S1 to S180) of the display screen (20).

5. Method according to one of the previous claims, wherein for view direction determination an image is captured from the user's face with a camera (10), and the view direction determination is made with the help of a step of dedicated image processing.

6. Method according to claim 5, wherein in the step of dedicated image processing the display screen area is segmented into a plurality of segments (S1 to S180) and with the help of a dedicated step of head position processing it is determined to which segment the user's gaze, is directed to, wherein during a training phase with the user in which the user is asked (91) to look at certain segments (S1 to S180) of the display screen (20) and where in each case a corresponding image is captured (93) of which in each case the corresponding head position is extracted and archived (94, 95), and wherein the best matching archived head position determines to which segment (S1 to S180) the user's gaze is directed to.

7. Method according to claim 6, wherein the head position processing includes a step of contour extraction (94) in the captured image and a step of comparing (104, 106) the extracted contour with archived contours which have been extracted and archived during said training phase, wherein the best matching archived contour image determines to which segment (S1 to S180) the user's gaze is directed to.

8. Method according to claim 7, wherein the contour images are subdivided (103) into at least two parts (L, R) and a comparison operation (104, 106) is executed respectively for each part and wherein it is verified (108) that the view direction determination with the at least two parts results in the same segment determination before highlighting text (109) on the display screen (20).

9. Method according to claim 6, wherein the head position processing includes a step of "T"-symbol extraction in the captured image and a step of comparing the extracted "T"-symbol with archived "T"-symbols which have been extracted and archived during said training phase, wherein the best matching archived "T"-symbol image determines to which segment (S1 to S180) the user's gaze is directed to.

10. Method according to claim 9, wherein for "T"-symbol extraction a first line is drawn connecting the determined centers of the user's eyes in the captured image and a second line is drawn along the back of the user's nose in the captured image.

11. Method according to one of the claims 6 to 10, wherein in addition to said head position processing an eye position processing step (1404) is performed and a step of comparing (1406) an extracted eye position with archived eye positions is performed for increasing the accuracy of gaze direction determination.

12. Method according to claim 11, wherein for eye position processing an additional training phase (1300 to 1307) is absolved with the user in which the user is asked to look straight (1301) at a dedicated segment (S1 to S180) of the screen (21) and to look at a plurality of segments at the border of the display screen (20) without moving the user's head (1303), wherein in each case a corresponding image is captured of which in each case a corresponding eye position is extracted (1305) and archived (1306).

13. Method according to claim 11 or 12, wherein the extracted eye position is compared with the archived eye positions and wherein the best matching archived eye position determines correction coordinates (1406) by which the view direction determination based on head position detection is to be corrected to result in a more accurate gaze direction determination.

14. Method according to one of claims 11 to 13, wherein an interpolation is carried out between a best matching archived eye position and the straight looking eye position from the additional training phase, for determining the correction coordinates for the extracted eye position.

15. Apparatus adapted for the use of the method according to one of the previous claims, comprising a central processing unit (CPU), random access memory (MEM) and a non-volatile memory (HDD), a display device (21) or an interface (IF) for a display device (21), **characterized in that** said archived head positions, contours, "T"-symbols or eye positions are recorded in the non-volatile memory (HDD), and the central processing unit (CPU) is configured to perform the tasks of comparing an extracted head position, contour, "T"-symbol or eye position with said archived head position, contour, "T"-symbol or eye position, and to determine the best match for gaze direction determination.

16. Apparatus according to claim 15, further comprising a graphical processing unit (GPU), wherein the tasks of comparing an extracted head position, contour, "T"-symbol or eye position with said archived head position, contour, "T"-symbol or eye position and determining the best match for gaze direction determination are performed solely in said graphical processing unit (GPU) or in the central processing unit (CPU) and the graphical processing unit (GPU) in a cooperative manner.

17. A computer readable storage medium having stored therein instructions enabling the performance of the steps of displaying text on the display screen (20), determining the view direction of the user while reading text on the display screen (20), highlighting text in a segment (S1 to S180) of the display screen which corresponds to the determined view direction, and wherein in the following a tracking of the user's view direction is performed by successively determining the view direction of the user while reading text on the display screen (20) and successively highlighting text in the corresponding segments of the display screen (20).
